(19) Europäisches Patentamt
European Patent Office
Office européen des brevets

(11) Publication number: 0 005 419
B1

(12) EUROPEAN PATENT SPECIFICATION

(45) Date of publication of patent specification: 30.03.83

(51) Int. Cl.[3]: C 01 F 7/74, C 02 F 1/52, B 01 D 12/00, D 21 H 3/68 //C 13 D 1/00

(21) Application number: 79850039.3

(22) Date of filing: 02.05.79

# (54) Aluminium sulphate compositions containing polynuclear complexes and a method of producing the same and the use thereof.

(30) Priority: 03.05.78 SE 7805135

(43) Date of publication of application:
14.11.79 Bulletin 79/23

(45) Publication of the grant of the patent:
30.03.83 Bulletin 83/13

(84) Designated Contracting States:
AT BE CH DE FR GB IT LU NL SE

(56) References cited:
DE - A - 2 554 218
DE - A - 2 617 282
DE - C - 619 190
US - A - 3 421 976
US - A - 3 540 980

Abstracts bulletin of the inst. of paper chemistry, Volume 48, Nr. 11, May 1978 page 1175, abstract Nr. 10980 J. G. PENNIMAN JR. "Examining pH as a factor in the papermaking process"
COMPREHENSIVE INORGANIC CHEMISTRY (1973) Pergamon Press p. 1056

(73) Proprietor: Boliden Aktiebolag
Box 5508
S-114 85 Stockholm (SE)

(72) Inventor: Nilsson, Rolf
Ransviksvägen 14
S-260 42 Mölle (SE)

(74) Representative: Lundin, Björn-Eric
Boliden Aktiebolag Box 5508
S-114 85 Stockholm (SE)

(56) References cited:
ACTA CHEMICAL SCANDINAVICA Volume 8 (1954) p. 1917—1926 "Studies on the Hydrolysis of Metal Ions" XI. The Aluminium Ion, A1 3+ Brosset, Biedermann and Sillen

EP 0 005 419 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Aluminium sulphate compositions containing polynuclear complexes and a method of producing the same and the use thereof

The present invention relates to aluminium sulphate compositions for use in such processes as the purification of water, the sizing of paper, and the de-watering of plants and specifically to compositions which will provide improved effect in above mentioned applications. The invention also relates to a method for producing said aluminium sulphate composition and the use thereof in purifying water, sizing paper, dewatering plants.

Aluminium sulphate, hereinafter referred to as ALS, for the purification of untreated water and the sizing of paper normally has a composition which can be described approximately as $Al_2(SO_4)_3 \cdot 14H_2O$. The sulphate content is slightly less than that which the formula states. The aluminium content is 9.1%. In addition to aluminium sulphate, aluminium sulphate for the chemical purification of sewage water also contains iron(III)sulphate and a certain amount of insoluble substance. Thus, the aluminium sulphate available under the tradename Boliden AVR contains 7% Al, 3% Fe and 2.5% insoluble substance.

C. Brosset et al have studied and disclosed the hydrolysis of metal ions, and particularly the aluminium ion in Acta Chem. Scand. *8* (1954) p. 1917—1926. Thus the authors thereby showed that the products obtained in the hydrolysis of aluminium, $Al^{3+}$, are polynuclear complexes and not mononuclear ones. Thereby, it is established that the polynuclear complexes in the acid range shows a ratio of [OH]:[AL] of 2,5:1. The article further discloses that salts of such complexes are sparingly soluble, whereby solutions having a concentration of 0.05 M are obtainable, only.

DE—A—2,617,282 discloses a process for the preparation of a solution of a hydroxy-metallic polymer and the use thereof in water treatment and particularly a polynuclear aluminium hydroxide complex, whereby a solution containing up to 2.5 moles/litre of an aluminium salt is added while stirred to a solution containing an amount of an alkaline or alkaline-earth hydroxide such that in a resulting solution the molar ratio of hydroxide to aluminium is 2.3 to 2.7 and the concentration of aluminium is 0.025 to 0.040 moles per litre. The complexes formed are in the form of chloride salt.

US—A—3,421,976 discloses a method of sizing paper in which aluminium sulphate and a material yielding e.g. sodium hydroxide are added to aqueous wood pulp, whereby pH is kept at 7 or below. The aluminium sulphate is hereby present in mononuclear form, whereby high amounts of aluminium sulphate have to be added to achieve an acceptable result.

When dissolving ALS in water, the solution is acid owing to the fact that the aluminium ions are hydrolyzed in accordance with the reaction formulae:

$$Al_2(SO_4)_3 \cdot 14H_2O \rightleftharpoons 2Al^{3+} + 3SO_4^{2-} + 14H_2O$$

$$Al^{3+} + H_2O \rightleftharpoons AlOH^{2+} + H^+$$

$$AlOH^{2+} + H_2O \rightleftharpoons Al(OH)_2^+ + H^+$$

$$mAl^{3+} + nH_2O \rightleftharpoons Al_m(OH)_n^{(3m-n)+} + nH^+$$

The concentration of ALS-solutions prepared in this way can vary between 0.5 and 50%, while the pH of said solutions is about 3.4—2.4. The pH-value of the solutions decreases with increasing ALS-concentration. the pH of an aluminium sulphate solution thus prepared can be raised by adding alkali in the form of, e.g., alkali metal hydroxide, ammonia or calcium hydroxide.

The pH of the solution can be lowered by adding an acid, e.g. sulphuric acid. The concentration of different aluminium hydroxide ions is dependent upon the pH of the solution. The figure illustrates how the concentration of different complex ions varies with the pH. The diagram is drawn for $C_{Al_{tot}}=0.1$ mol/l with the aid of thermodynamic equilibrium constants taken from the literature, and thus applies when the activity coefficients are equal to 1. In reality, these coefficients are not equal to 1. Consequently, the diagram does not give the absolute values of the concentration, but provides rather a qualitative picture of how the concentration of the various complexes varies when the pH is changed. The poly-nuclear complex, $Al_m(OH)_n^{(3m-n)+}$, may be of different sorts, i.e. m and n may have different values, but must be positive integers and the ratio n/m is generally within the range about 2.3 and 2.7. A dominant complex, however, is $Al_{13}(OH)_{34}^{5+}$, and this complex thus represents all the poly-nuclear complexes in the figure. As will be seen from the diagram, when an aluminium sulphate solution prepared by dissolving aluminium sulphate and having a pH of about 3, is alkalized, the amount of poly-nuclear complexes contained in the solution will first increase, and then decrease. The solution contains its maximum quantity of poly-nuclear complexes when the pH is about 4.8.

In conjunction with the advent of the present invention, it has now surprisingly been found that aluminium sulphate solutions can be more effectively utilized when the pH of a relevant solution is adjusted to a pH range such that the solution will contain substantial amounts poly-nuclear complexes of the aforementioned type and whereby more concentrated solutions can be obtained.

One object of present invention provides an aqueous aluminium composition, which comprises an aqueous solution of aluminium sulphate and polynuclear complexes therein of the formula

$$Al_m(OH)_n^{(3m-n)+}$$

where m and n are positive integers, having a pH of between 2.9 and the highest pH, at which precipitation of aluminium hydroxide is substantially avoided, characterized in that the concentration of aluminium is 0.2 to 2.3 moles per litre in said solution and a method of producing the same.

A further object of the invention relates to the use of an aqueous aluminium composition comprising an aqueous solution of aluminium sulphate and polynuclear complexes therein of the formula

$$Al_m(OH)_n^{(3m-n)+}$$

where m and n are positive integers, having a pH between 2.9 and the highest pH, at which precipitation of aluminium hydroxide is substantially avoided, characterized in that the concentration of aluminium is 0.2 to 2.3 moles per litre in said solution in the purifying of water, the sizing of paper and the dewatering of plants.

Against the background of the diagram shown in the figure, this pH-range is within approximately the range 2.9 to 5.5 depending on the prevailing aluminium sulphate concentration as can be illustrated by the following table

| Solution concentration mol Al/l | Maximum pH value | Required supply of alkali to reach maximum pH value mol [$OH^-$]/[mol Al] |
|---|---|---|
| 0.2 | 4.5 | 1.5 |
| 0.5 | 3.7 | 1.1 |
| 1.0 | 3.2 | 0.8 |
| 1.8 | 3.0 | 0.35 |
| 2.0 | 2.9 | 0.3 |

Although the invention is not limited to any particular theory, it is assumed that this increase in efficiency of the solution is due to the fact that the attraction forces of the hydrolyzed aluminium ions are increased; as will be described in more detail hereinafter.

The aluminium sulphate concentration of the solution used is not critical and can be varied within the claimed limits. It can be said quite generally that these aluminium sulphate concentrations which are applicable when applying conventional techniques, for example, in conjunction with the purification of water, the sizing of paper or the dewatering of plants, can also be used when applying the technique according to the present invention.

A series of solutions containing poly-nuclear complexes has been prepared in the aforedescribed manner and used for:

(a) preparing drinking water from untreated water,
(b) chemically purifying waste water,
(c) dewatering plants, and
(d) for fixing resins on cellulose fibres when sizing paper.

These various applications will be described hereinafter. Hereinafter, the term "aluminium sulphate" will be abbreviated to ALS, while the corresponding poly-nuclear complex will be referred to as FALS.

As previously mentioned, the aluminium sulphate solutions applicable in the method according to the present invention are not limited to any narrow concentration ranges. Thus, the aluminium sulphate concentration may lie within a range of about 0.2 to 2.3 mol Al/l, which corresponds to aluminium hydroxide precipitation and maximum solubility for the aluminium sulphate respectively. The pH of the aluminium sulphate solution can be adjusted to a suitable value within said range by using any suitable base. Thus there can be used an alkali metal hydroxide or earth alkali metal hydroxide or ammonia. Sodium hydroxide and calcium hydroxide are particularly preferred.

(a) When preparing drinking water from untreated water, the water is often treated with aluminium sulphate. This is particularly true when the untreated water is surface water. The aluminium sulphate is dissolved in water in the aforedescribed manner and the aluminium sulphate solution is then admixed with the untreated water. The state of the aluminium sulphate solution is approximately that shown at point A in Figure 1. When the solution is mixed with water, the system moves to point B. In this state the solution is saturated with respect to aluminium hydroxide and the compound consequently precipitates out (B→C).

The hydrolyzed aluminium ions present in the aluminium sulphate solution have a positive charge, while the particles suspended in the water normally have a negative charge. The positive complex aluminium hydroxide ions attract the negative particles and in this way capture said particles in the flocs thus formed. The flocs, and therewith also the impurities, are removed from the water by settling

processes and/or filtering processes. The magnitude of the attraction forces is dependent upon the size of the positive charge of the aluminium ion. According to the Hardy-Schultzes' rule, the attraction and coagulating ability increases by more than a power of ten when the charge increases by one unit.

Thus, a poly-nuclear ion, here represented by $Al_{13}(OH)_{34}^{5+}$ has a greater coagulating ability than the mono-nuclear ions $Al^{3+}$, $Al(OH)^{2+}$ and $Al(OH)_2^+$. Other poly-nuclear ions present in aluminium sulphate solutions all have charges $\geqslant^{4+}$, in addition to the aforementioned $Al_{13}(OH)_{34}^{5+}$. The purifying effect of conventional aluminium sulphate (ALS)-solution was compared in a series of tests with the purifying effect of aluminium sulphate solutions which had been given a higher pH value, and therewith a higher content of poly-nuclear complexes (FALS), by adding an alkali. This concentration of poly-nuclear complexes is preferably selected to be as high as possible, suitably generally not less than a value corresponding to a log [Al] value of about −4. It was found that the FALS-solutions were much more effective than the ALS-solutions (see Example 1).

(b) Aluminium sulphate and iron aluminium sulphate (e.g. Boliden AVR) are also used to chemically purify waste or sewage water. This purifying process is similar to that described with reference to preparing drinking water from untreated water. As with this latter method, aluminium hydroxides are formed, which remove the substances suspended in the water by flocculation. When aluminium sulphate which contains iron is used, hydroxides of iron are formed in an analogous manner, which has the same flocculating effect on the suspended substances as aluminium hydroxide. In addition to this flocculating-out of suspended substances, ortho phosphates and condensed phosphates dissolved in the sewage water are precipitated out chemically. In addition, many heavy metals are caused to precipitate as hydroxides. Among such metals can be mentioned Hg, Pb, Cd, Cr, Cu and As(V). By means of this chemical purification process, the waste water is freed in this way from organic substances, phosphorus compounds, infectious and contagious matter, the eggs of intestinal worms and heavy metals. In a plurality of experiments, according to the present invention, waste water was chemically purified with aluminium sulphate (ALS)-solutions whose pH was raised by adding alkali thereto in a manner such as to increase the percentage of poly-nuclear ions therein. The poly-nuclear solutions were found to have better purifying properties than conventional aluminium sulphate solutions (see Example 2).

(c) A third field in which aluminium sulphate solutions can be used is the dewatering of plants which contain water and plant juices. In the sugar industry, the juices of decomposed sugar beet are leached out with water. The residual solid substance is then dewatered in screw presses, the dewatered residues being subsequently dried and mixed with animal fodder. The drying operation requires considerable amounts of energy, and hence it is important that as much liquid as possible is removed from the beets by the pressing operation, i.e. to obtain the highest possible dry content. It is known that the dry substance content will be considerably higher when an aluminium sulphate solution is sprayed onto the beet mass prior to said pressing operation, than when the pressing operation is carried out in the absence of aluminium sulphate. Experiments made in conjunction with the present invention have shown that the use of aluminium sulphate solutions containing poly-nuclear complexes results in a higher dry substance content of the beet mass subsequent to said pressing operation than when conventional aluminium sulphate solutions are used. Consequently, the amount of energy consumed in the subsequent drying of the beet mass is much less than when treating the mass with a conventional aluminium sulphate solution (see Example 3).

(d) A fourth field of use for aluminium sulphate is the sizing of paper. Paper is sized in order to decrease its ability to absorb water; such that it is possible to write on the paper with ink or to print thereon without the ink spreading. In addition, sized paper which has been wetted is stronger than unsized paper, which is of importance in, for example, the case of wrapping paper. When sizing paper, a resin adhesive is coated on the fibres thereof. Owing to the fact that both the cellulose fibres and the resin are negatively charged, the fibres can not readily be coated with the adhesive. The resin most commonly used is namely produced from crude pine oil, resin gum and the like, and the active constituents of the resin is the anionic part of the organic resin compound in question. Thus, when sizing paper, there is added to the process an aluminium sulphate solution, whereupon the positive aluminium ions combine with the negatively charged anionic part of the resin. The aluminium resin compound has a surplus positive charge and the aluminium resin complex thus combines rapidly with the negatively charged fibre. The sizing operation is carried out most effectively at pH values of between 4.0 and 5.5. In accordance with the present invention, it has been found that the sizing operation is carried out quickly and is more effective when instead of adding an aluminium sulphate solution there is added a FALS-solution, i.e. ALS-solution in which the percentage of poly-nuclear ions has been raised by adding an alkali. The poly-nuclear ions have a high charge, $\geqslant 4+$, and therefore join more efficiently to the resin anions than do single-nuclear aluminium ions.

The invention will now be illustrated by means of a number of examples given with reference to the following Tables I—IV in the description.

Example 1

Surface water taken from a river was flocculated on a pilot plant scale in a mobile purification plant. The purification plant comprised two mutually parallel lines, one a reference line and the other a

test line, each with a through-flow capacity of 1—2 $m^3$ per hour. Each line comprised three flocculation tanks connected in series and a following settling tank having a depth of 3 meters. The water was flocculated in the reference line with a conventional aluminium sulphate solution, and in the test line with a poly-nuclear aluminium sulphate solution prepared by adding NaOH (0.7 mol NaOH per mol Al) to a conventional ALS-solution. The test gave the following result. Unless otherwise mentioned, the concentration of ALS and FALS was 10 g Al/l, i.e. 0.37 mol Al/l. During the test period, the pH of the incoming water was about 7.3—7.9, while the pH of the outgoing, flocculated water was 6,4—6,8.

a) The Al-content of the purified water was as follows:

| | | | | |
|---|---|---|---|---|
| Surface load upon settling $m^3/m^2 \cdot h$ | 1 | 1,5 | 2 | 2 |
| Al-dosage, $g/m^3$ | 3.6 | 2.4 | 2.3 | 2.7 |
| Residual content Al, mg/l | | | | |
| the ALS-line | 0.33 | 0.43 | 0.81 | 0.83 |
| the FALS-line | 0.30 | 0.37 | 0.56 | 0.40 |

Thus, subsequent to flocculating the water with FALS, the residual content of aluminium was much lower than when flocculating with ALS, particularly with a high surface load. In filtered samples, the content of Al in the outgoing water from both lines was <0.1 mg/l. The Al-content is thus measured on the amount of flocs present in the outgoing water. The result shows that FALS-solutions give a much clearer water than ALS-solutions.

b) The phosphate content of the incoming water was about 0.5 mgP/l and in the outgoing water <0.1 mg P/l. There was no significant difference between the reduction in phosphorus between the lines.

c) The turbidity of the incoming river water was, as a rule, about 1 FTU (Formazin Turbidity Units) but was seen to rise to >30 FTU when it rained. The following result was obtained in the pilot unit. The pH of the ALS-solution was 3.3 and of the FALS-solution 3.75.

| Number of days | 5 | 4 | 8 | 3 |
|---|---|---|---|---|
| Surface load when settling $m^3/m^2 \cdot h$ | 1 | 1,5 | 2 | 2 |
| Dosage Al $g/m^3$ | 3.6 | 2.4 | 2.3 | 2.7 |
| Turbidity FTU incoming | 0.47 | 0.68 | 1.78 | 7.30 |
| The ALS-line, outgoing | 0.19 | 0.32 | 1.85 | 2.80 |
| The FALS-line outgoing | 0.19 | 0.13 | 0.49 | 1.16 |

The result shows that the poly-nuclear solution is much more capable of flocculating out the material suspended in the river water after it has rained, particularly when the settling stage is overloaded and the quantities of AL charged to the water are low.

Table I illustrates the variations in turbidity over 24 hours. On the 13th of May 1977 there was obtained an average reduction in turbidity of 77% in respect of the FALS-line. The corresponding reduction in the ALS-line was 17% under otherwise similar conditions.

d) The effect of the Al-concentration.

The following test values show that approximately the same purifying result is obtained with a concentration of 0.18 mol Al/l in the FALS-solution as with 0.36 mol Al/l in the ALS-solution. The pH of the FALS-solution=3.75.

| | |
|---|---|
| Surface load when settling | 1 $m^3/m^2 \cdot h$ |
| Dosage | 3.6 g $Al/m^3$ |
| Temperature | 7.5°C |

TABLE I
Flocculation of river water at a surface load of 2.0 $m^3/m^2$, h

| Date 1977 | Time | Dosage Al $g/m^3$ | Turbidity FTU | | |
|---|---|---|---|---|---|
| | | | River water | Floccul. 1[x)] | Floccul. 2[x)] |
| 13-5 | 9.00 | 2.3 | 2.0 | 1.0 | 0.2 |
| | 13.00 | 2.3 | 2.2 | 1.5 | 1.0 |
| | 17.00 | 2.3 | 23.5 | 18.0 | 2.2 |
| | 21.00 | 2.3 | 14.2 | 9.0 | 0.5 |
| 14-5 | 1.00 | 2.3 | 1.5 | 1.0 | 0.3 |
| | 5.00 | 2.3 | 1.2 | 0.8 | 0.5 |
| | 9.00 | 2.3 | 1.2 | 0.8 | 0.4 |
| 20-7 | 9.00 | 2.7 | 32.0 | 6.5 | 2.0 |
| | 13.00 | 2.7 | 18.0 | 6.0 | 1.0 |
| | 17.00 | 2.7 | 10.0 | 4.5 | 0.8 |
| | 21.00 | 2.7 | 8.5 | 3.5 | 0.5 |
| 21-7 | 1.00 | 2.7 | 8.0 | 3.5 | 0.3 |
| | 5.00 | 2.7 | 8.0 | 3.5 | 0.3 |
| | 9.00 | 2.7 | 7.0 | 2.3 | 0.6 |
| | 13.00 | 2.7 | 4.6 | 2.2 | 0.5 |
| | 17.00 | 2.7 | 3.5 | 2.0 | 0.5 |
| | 21.00 | 2.7 | 4.5 | 2.3 | 0.7 |
| 22-7 | 1.00 | 2.7 | 2.8 | 1.8 | 0.5 |
| | 5.00 | 2.7 | 3.9 | 2.0 | 0.5 |
| | 9.00 | 2.7 | 4.0 | 1.7 | 0.4 |
| | 13.00 | 2.7 | 3.6 | 1.6 | 0.4 |
| | 17.00 | 2.7 | 3.3 | 1.7 | 0.8 |
| | 21.00 | 2.7 | 3.3 | 1.7 | 0.4 |
| 23-7 | 1.00 | 2.7 | 3.0 | 1.5 | 0.7 |
| | 5.00 | 2.7 | 2.7 | 1.6 | 0.9 |
| | 9.00 | 2.7 | 2.5 | 1.6 | 0.3 |

[x)] Floccul. 1=after precipitation using an ALS solution having a pH of 3.3
Floccul. 2=after precipitation using a FALS solution having a pH of 3.7

| | |
|---|---|
| Turbidity FTU | |
| incoming water | 1.11 |
| outgoing FALS (0.18 mol Al/l) | 0.15 |
| outgoing FALS (.36 mol Al/l) | 0.18 |
| P content mg/l | 0.18 |
| Incoming water | |
| outgoing FALS (0.18 mol Al/l) | 0.06 |
| outgoing FALS (0.36 mol Al/l) | 0.04 |

e) Sludge properties. The poly-nuclear complexes result in flocs which are sparsely constructed. They have a mechanical strength which allows some mechanical handling without disintegration of the flocs. The filter ability of the settled sludge has been examined. It has been found that the sludge obtained with a FALS-solution has a lower resistance to filtering than that obtained with an ALS-solution.

| Sludge obtained from | Filtering resistance m/kg · $10^{12}$ |
|---|---|
| The ALS-line | 64 |
| The FALS-line | 44 |

Example 2

A large number of tests have been made on the purification of sewage water with aluminium sulphate solutions and poly-nucleus aluminium sulphate solutions. The ALS- and FALS-solutions used contained 0.15 mol of Al/l.

Subsequent to dissolving the conventional aluminium sulphate, the solution got a pH of 3.4. From this solution there was prepared a solution having a pH 2, by adding $H_2SO_4$, and two FALS solutions by adding NaOH, the first solution having a pH of between 3.7 and 3.8 and the second solution having a pH of 4.7.

The water which was flocculated was a mechanically or mechanically-biologically purified sewage water. The aluminium sulphate solutions were mixed in the water with the aid of a gate agitator. The solutions were mixed with the water very rapidly, over a period of less than 30 seconds. The agitating speed was then lowered to a relatively low value (peripheral speed <0.1 m/s) and the aluminium sulphate flocs were than allowed to form over a period of 20 minutes. The solution was then transferred to a turbidity meter. The turbidity of the mixture, expressed in Jackson Turbidity Units (JTU), was read off every other minute for 20 minutes. Subsequent to this flocculation, the pH of the water was 6—7.

Table II shows the result of these tests when dosing biologically or mechanically purified water with 9 mg Al/l. It is perfectly obvious that the turbidity of the water was quickly reduced when using the solutions having increased pH values (3.7—3.8 and 4.7 respectively), i.e. FALS-solutions. A pH of 4.7 is the highest possible, which can be obtained at the given concentration. If the pH is increased above 4.7 aluminium hydroxide will be precipitated out in the solution and accordingly the result will be deteriorated. It will be seen from the figure that this solution contains a higher content of poly-nuclear complex, referenced $Al_{13}(OH)_{34}^{5+}$, than the remaining. The higher electrical charge of the poly-nuclear ions explains the higher effectivity. Table III illustrates how the turbidity of the water is decreased by the treatment. This decrease in turbidity is expressed in percentage. In addition, the residual content of phosphorus in the filtered samples is also shown. It will be clearly seen that the residual content is least when the aluminium sulphate solution used has a pH of 3.8 or 4.7, i.e. when the solution contained the maximum amounts of poly-nuclear complex (FALS-solution). The table III illustrates tests carried out with biologically or mechanically purified water. The result is qualitatively the same for mechanically purified water as with biologically purified water.

TABLE II

Flocculation of water at a dosage of 9 mg Al/l using ALS and FALS solutions respectively

| Water purified | Time after dosage minutes | Turbidity (JTU) after supply of solutions having a pH of | | | |
|---|---|---|---|---|---|
| | | 2.1 | 3.4 | 3.7 | 4.7 |
| Biologically | 0 | 13.0 | 12.0 | 12.0 | 12.0 |
| Biologically | 2 | 13.0 | 11.5 | 11.1 | 10.9 |
| Biologically | 4 | 12.0 | 11.0 | 11.0 | 10.5 |
| Biologically | 6 | 12.0 | 10.5 | 10.5 | 10.2 |
| Biologically | 8 | 12.0 | 11.0 | 9.7 | 9.4 |
| Biologically | 10 | 12.0 | 10.5 | 9.0 | 8.8 |
| Biologically | 12 | 12.0 | 9.8 | 8.5 | 8.0 |
| Biologically | 14 | 11.0 | 9.7 | 8.2 | 7.7 |
| Biologically | 16 | 11.0 | 9.7 | 7.8 | 7.6 |
| Biologically | 18 | 11.0 | 9.7 | 7.9 | 7.5 |
| Biologically | 20 | 11.0 | 9.8 | 7.4 | 7.2 |
| Mechanically | 0 | 50.0 | 50.0 | 47.5 | 47.5 |
| Mechanically | 2 | 49.0 | 49.5 | 47.0 | 44.5 |
| Mechanically | 4 | 46.5 | 47.5 | 43.0 | 41.0 |
| Mechanically | 6 | 45.0 | 46.0 | 41.0 | 40.0 |
| Mechanically | 8 | 44.5 | 45.5 | 39.0 | 37.0 |
| Mechanically | 10 | 43.5 | 44.5 | 37.5 | 36.0 |
| Mechanically | 12 | 42.0 | 44.0 | 35.0 | 34.0 |
| Mechanically | 14 | 41.5 | 42.5 | 33.0 | 32.0 |
| Mechanically | 16 | 40.5 | 41.0 | 30.0 | 29.5 |
| Mechanically | 18 | 39.5 | 40.0 | 29.5 | 28.5 |
| Mechanically | 20 | 39.0 | 39.5 | 28.0 | 28.0 |

TABLE III
Flocculation of biologically purified sewage water using aluminium sulphate solutions (ALS and FALS respectively) having different pH values

| Water purified | Al dosage mg/l | pH of solution | Decrease in turbidity % | Residual $P_{tot}$ mg/l |
|---|---|---|---|---|
| Biologically | 9.0 | 2.1 | 12 | |
| Biologically | 9.0 | 3.4 | 13 | |
| Biologically | 9.0 | 3.7 | 32 | |
| Biologically | 9.0 | 4.7 | 44 | |
| Biologically | 13.5 | 2.1 | 38 | |
| Biologically | 13.5 | 3.4 | 42 | |
| Biologically | 13.5 | 3.7 | 52 | |
| Biologically | 13.5 | 4.7 | 59 | |
| Biologically | 18.0 | 2.1 | 59 | |
| Biologically | 18.0 | 3.4 | 67 | |
| Biologically | 18.0 | 3.7 | 72 | |
| Biologically | 18.0 | 4.7 | 79 | |
| | | | | (Initial $P_{tot}$=3.5) |
| Biologically | 9.0 | 2.0 | 39 | 1.04 |
| Biologically | 9.0 | 3.8 | 84 | 0.60 |
| Biologically | 9.0 | 4.7 | 94 | 0.66 |
| Mechanically | 9.0 | 2.0 | 23 | |
| Mechanically | 9.0 | 3.4 | 23 | |
| Mechanically | 9.0 | 3.8 | 43 | |
| Mechanically | 9.0 | 4.7 | 49 | |
| Mechanically | 13.5 | 2.0 | 66 | |
| Mechanically | 13.5 | 3.4 | 58 | |
| Mechanically | 13.5 | 3.8 | 65 | |
| Mechanically | 13.5 | 4.7 | 74 | |
| | | | | (Initial $P_{tot}$=5.0) |
| Mechanically | 9.0 | 2.0 | 49 | 1.50 |
| Mechanically | 9.0 | 3.4 | 33 | 1.45 |
| Mechanically | 9.0 | 3.8 | 74 | 1.20 |
| Mechanically | 9.0 | 4.7 | 81 | 1.40 |

Example 3

The results illustrated in Table IV were obtained when dewatering leached beet pulp in a screw press, both with and without spraying the beet pulp with aluminium sulphate solutions.

The aluminium sulphate solution added was a 30% solution with respect to $Al_2(SO_4)_3 \cdot 14\ H_2O$, i.e. it contained 1.1 mol Al/l and the dosage was 45 g of Al per ton of beet. The poly-nuclear aluminium sulphate solution added was prepared by admixing the 30% aluminium sulphate solution with a 25% ammonia in a quantity such that the pH of the solution was 3.75. The ammonia addition was 1.2 mol $NH_3$ per mol of Al. The thus prepared poly-nuclear aluminium sulphate solution was then sprayed on the beet mass in a quantity corresponding to 45 g of Al per ton of beet. Thus, the dosage was the same as that when spraying with conventional aluminium sulphate solution.

Example 4

In a series of flocculation tests water containing suspended clay was flocculated using as the flocculation agent aluminium sulphate solutions, which were used as such or after alkalization with NaOH. The alkali supply was varied in the different tests as indicated in the following table V. The flocculating procedure was the same as in Example 2.

The test data in table V show that non-alkalized solutions provide a flocculation of suspended clay which is definitely inferior to that of the alkalized solutions. They further show that a good effect with the poly-nuclear complexes is achieved even at pH 3.8, but far better effect is achieved when increasing the alkalization. However, if the alkalization has been increased too far, so that aluminium hydroxide is

precipitated, the efficiency will be poorer (last line of the table). The test data emphasize the fact that has been set forth hereinbefore, viz. that the poly-nuclear complexes to a considerable extent have been formed already at a pH of 3.8, but also that their concentration reaches a maximum at a pH of 4.8.

TABLE IV
Dewatering of beet mass in a screw press.
Dosage 45 g Al per ton beet mass.

| | Pressing stage | | | | |
|---|---|---|---|---|---|
| | TS | Water removed | Cost of chemicals | Drying energy | Chemical costs+ drying costs |
| Method | % | kg/ton beet | Swed. crowns/ ton beet | Swed. crowns/ ton beet | Swed. crowns/ ton beet |
| No pressing | 6,0 | 0 | 0 | 0 | 0 |
| Pressing without additions | 22,8 | 737 | 0 | x | x |
| Pressing subsequent to addition of ALS-solution | 25,2 | 762 | 0,23[1)] | x-0,94 | x-0,71 |
| Pressing subsequent to addition of FALS-solution | 26,4 | 773 | 0,26[2)] | x-1,35 | x-1,09 |

TS=dry substance content
[1)] cost of ALS
[2)] cost of ALS+$NH_3$

The saving in costs made by using multi-nuclear aluminium sulphate solutions is thus as high as (x-0,71)–(x-1,09)=0.38 Swed. Cr./ton beet.

TABLE V

| Solution used | | | Water turbidity (and pH) | | |
|---|---|---|---|---|---|
| | | | Before flocculation | After flocculation | |
| Conc. mol/l | Alkali supply mol OH/mol Al | pH | FTU | FTU | pH |
| 0.32 | 0 | 3.3 | 100 | 27 | 6.4 |
| 0.32 | 0.8 | 3.8 | 100 | 16 | 6.4 |
| 0.32 | 1.3 | 4.1 | 100 | 8.3 | 6.45 |
| 0.32 | 1.9 | 4.3 | 100 | 6.8 | 6.6 |
| 0.16 | 0 | 3.6 | 100 | 26 | 6.5 |
| 0.16 | 0.6 | 3.8 | 100 | 17 | 6.5 |
| 0.16 | 1.5 | 4.3 | 100 | 13 | 6.7 |
| 0.16 | 1.9 | 4.5 | 100 | 10 | 6.8 |
| 0.03 | 0 | 3.8 | 100 | 30 | 6.5 |
| 0.03 | 0.5 | 4.0 | 100 | 22 | 6.5 |
| 0.03 | 1.6 | 4.2 | 100 | 15 | 6.65 |
| 0.03 | 1.8[x)] | 4.5 | 100 | 28 | 6.75 |

[x)] The solution contained precipitated $Al(OH)_3$.

**Claims**

1. An aqueous aluminium composition, which comprises an aqueous solution of aluminium sulphate and positively charged, polynuclear ionic complexes therein of the formula

$$Al_m(OH)_n^{(3m-n)+}$$

where m and n are positive integers, having a pH of between 2.9 and the highest pH, at which precipitation of aluminium hydroxide is substantially avoided, characterized in that the concentration of aluminium is 0.2 to 2.3 moles per litre in said solution.

2. A method of producing the composition of claim 1, comprising dissolving solid aluminium sulphate in water to provide a concentration of between 0.2 and 2.3 moles Al per litre, adjusting the pH of the resulting solution by supplying a base in the form of an alkali metal hydroxide or earth alkali metal hydroxide or ammonia to exceed 2.9 but to be below the pH, at which substantial aluminium hydroxide precipitation will occur.

3. The use of an aqueous aluminium sulphate composition comprising a solution of aluminium sulphate and positively charged, polynuclear ionic complexes therein of the formula

$$Al_m(OH)_n^{(3m-n)+}$$

where m and n are positive integers, having a pH of between 2.9 and the highest pH, at which precipitation of aluminium hydroxide is substantially avoided, characterized in that the concentration of aluminium is 0.2 to 2.3 moles per litre in said solution in the purifying of water, the sizing of paper and the dewatering of plants.

**Patentansprüche**

1. Wässrige Aluminiumzusammensetzung, die eine wässrige Lösung von Aluminiumsulfat und positiv geladener, mehrkerniger ionischer Komplexe der Formel

$$Al_m(OH)_n^{(3m-n)+}$$

worin m und n positive ganze Zahlen sind, mit einem pH-Wert zwischen 2,9 und dem höchsten pH-Wert, bei dem Ausfällung von Aluminiumhydroxid im wesentlichen vermieden wird, umfaßt, dadurch gekennzeichnet, daß die Aluminiumkonzentration 0,2 bis 2,3 Mol je Liter in dieser Lösung ist.

2. Verfahren zur Herstellung der Zusammensetzung nach Anspruch 1, dadurch gekennzeichnet, daß man festes Aluminiumsulfat in Wasser löst und so eine Konzentration zwischen 0,2 und 2,3 Mol Al je Liter erhält, den pH-Wert der resultierenden Lösung durch Zugabe einer Base in der Form eines Alkalihydroxids oder Erdalkalihydroxids oder von Ammoniak so einstellt, daß er 2,9 überschreitet, aber unterhalb dem pH-Wert liegt, bei dem eine wesentliche Aluminiumhydroxidausfällung eintritt.

3. Verwendung einer wässrigen Aluminiumsulfatzusammensetzung, die eine Lösung von Aluminiumsulfat und positiv geladenen, mehrkernigen ionischen Komplexen der Formel

$$Al_m(OH)_n^{(3m-n)+}$$

worin m und n positive ganze Zahlen sind, mit einem pH-Wert zwischen 2,0 und dem höchsten pH-Wert, bei dem Ausfällung von Aluminiumhydroxid im wesentlichen vermieden wird, umfaßt, dadurch gekennzeichnet, daß die Aluminiumkonzentration dieser Lösung bei der Reinigung von Wasser, beim Leimen von Papier und der Entwässerung von Pflanzen 0,2 bis 2,3 Mol je Liter beträgt.

**Revendications**

1. Composition aqueuse d'aluminium, qui consiste en une solution aqueuse de sulfate d'aluminium et de complexes ioniques polynucléaires, chargés positivement, répondant à la formule:

$$Al_m(OH)_n^{(3m-n)+}$$

dans laquelle m et n sont des nombres entiers positifs, cette solution ayant un pH compris entre 2,9 et la valeur la plus élevée de pH à laquelle on évite pratiquement totalement und précipitation d'hydroxyde d'aluminium, cette composition étant caractérisée en ce que la concentration de l'aluminium est de 0,2 à 2,3 moles par litre dans cette solution.

2. Procédé de production de la composition suivant la revendication 1, caractérisé en ce qu'il comprend la dissolution de sulfate d'aluminium solide dans de l'eau pour donner une concentration comprise entre 0,2 et 2,3 moles de Al par litre, l'ajustement du pH de la solution résultante par alimentation d'une base sous la forme d'un hydroxyde de métal alcalin, d'un hydroxyde de métal

alcalino-terreux ou d'ammoniac afin que ce pH dépasse 2,9 mais soit inférieur au pH auquel une précipitation importante d'hydroxyde d'aluminium se produirait.

3. Utilisation, dans la purification de l'eau, l'encollage du papier et la déshydratation de végétaux, d'une composition aqueuse de sulfate d'aluminium, comprenant une solution de sulfate d'aluminium et de complexes ioniques polynucléaires, chargés positivement, répondant à la formule:

$$Al_m(OH)_n^{(3m-n)+}$$

dans laquelle m et n sont des nombres entiers positifs, cette solution ayant un pH compris entre 2,9 et la valeur la plus élevée de pH à laquelle on évite pratiquement totalement une précipitation d'hydroxyde d'aluminium, cette composition étant caractérisée en ce que la concentration d'aluminium est de 0,2 à 2,3 mole par litre dans la solution.

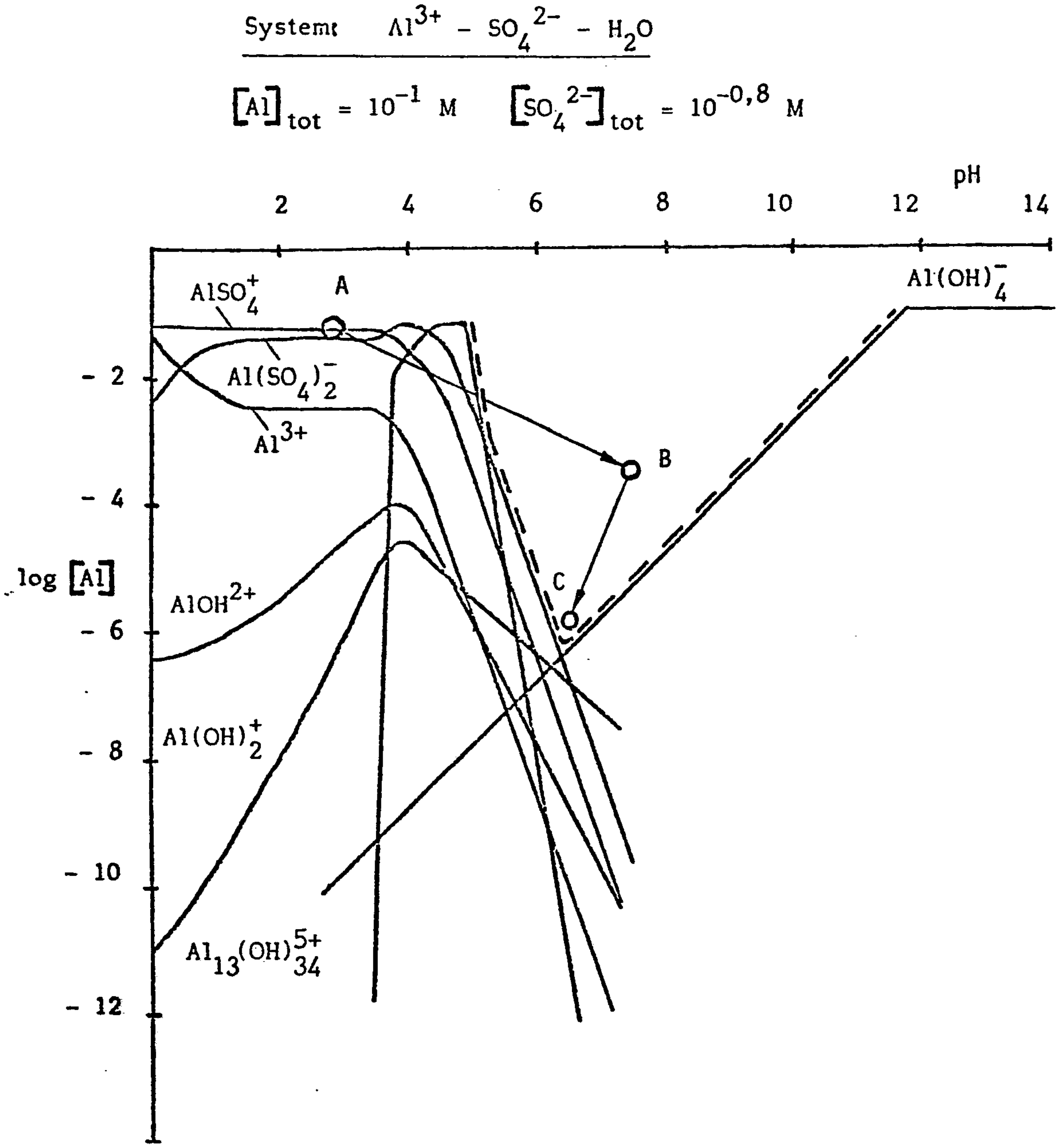
System: $Al^{3+} - SO_4^{2-} - H_2O$
$[Al]_{tot} = 10^{-1}$ M    $[SO_4^{2-}]_{tot} = 10^{-0,8}$ M
pH
2
4
6
8
10
12
14
log [Al]
- 2
- 4
- 6
- 8
- 10
- 12
$AlSO_4^+$
A
$Al(SO_4)_2^-$
$Al^{3+}$
B
C
$AlOH^{2+}$
$Al(OH)_2^+$
$Al_{13}(OH)_{34}^{5+}$
$Al(OH)_4^-$